# EUROPÄISCHE PATENTSCHRIFT

(11) **EP 2 630 280 B1**
(45) Veröffentlichungstag und Bekanntmachung des Hinweises auf die Patenterteilung: **07.02.2018**
(21) Anmeldenummer: 11773449.1
(22) Anmeldetag: 18.10.2011
(51) Int. Cl.: B29C 47/00, B29C 47/88, B29C 55/06, D01D 13/02, D01D 10/02, D01D 10/04

(54) **VORRICHTUNG ZUR HERSTELLUNG VON STRANGFÖRMIGEN PRODUKTEN**
DEVICE FOR PRODUCING STRAND-SHAPED PRODUCTS
SYSTÈME POUR LA FABRICATION DE PRODUITS EXTRUDÉS

(30) Priorität: 22.10.2010 DE 102010049325
(43) Veröffentlichungstag der Anmeldung: 28.08.2013
(73) Patentinhaber: Oerlikon Textile GmbH & Co. KG, 42897 Remscheid (DE)
(72) Erfinder: WEINHOLD, Jens, 09117 Chemnitz (DE)
(74) Vertreter: Kahlhöfer, Hermann
(86) Internationale Anmeldenummer: PCT/EP2011/068160
(87) Internationale Veröffentlichungsnummer: WO 2012/052422

(56) Entgegenhaltungen:
- EP-A1- 2 415 915
- EP-A2- 0 350 945
- EP-A2- 0 541 133
- CN-A- 101 476 170
- CN-U- 202 064 049
- DE-A1- 1 469 051
- DE-A1-102009 030 880
- GB-A- 919 261
- US-A- 3 651 196

## Beschreibung

Die Erfindung betrifft eine Vorrichtung zur Herstellung von strangförmigen Produkten wie synthetische Bänder, Faserstränge, Monofilamente oder Folien gemäß dem Oberbegriff des Anspruches 1 sowie eine Heizvorrichtung zur Verwendung in einer derartigen Vorrichtung.

Eine gattungsgemäße Vorrichtung zur Herstellung von strangförmigen Produkten ist beispielsweise aus der EP 0541133 B1 bekannt.

Bei der Herstellung von strangförmigen Produkten wie synthetische Bänder, Faserstränge, Monofilamente oder Folien, die aus einer Polymerschmelze extrudiert werden, ist es allgemein bekannt, dass die Produkteigenschaften wie beispielsweise die Zugfestigkeit und die Dehnbarkeit durch eine mehrstufige Behandlung an dem Produkt unmittelbar nach dem Extrudieren erzeugt werden. So wird die Zugfestigkeit und die Dehnbarkeit synthetischer Produkte im Wesentlichen durch den Grad der Verstreckung bestimmt. So weisen die bekannten Vorrichtungen zur Herstellung von strangförmigen Produkten üblicherweise mehrere Behandlungseinrichtungen auf, die mit mehreren Walzenlieferwerken zu einer Maschinenlängsseite hintereinander angeordnet sind.

Die aus der EP 0541133 B1 bekannte Vorrichtung weist zur Herstellung von synthetischen Monofilamenten eine Extrusionseinrichtung, eine Kühleinrichtung sowie mehrere Walzenlieferwerke und mehrere Behandlungseinrichtungen auf. In einer ersten Behandlungseinrichtung, die zwischen zwei Walzenlieferwerken angeordnet ist, erhalten die Monofilamente eine Heißdampfbehandlung, um das thermoplastische Material auf eine Verstrecktemperatur zu erwärmen. Die Walzen der Walzenlieferwerke sind zum Verstrecken der Monofilamente mit einer Differenzgeschwindigkeit angetrieben. Im weiteren Verlauf folgt eine zweite Behandlungseinrichtung, um die Monofilamente in weiteren Stufen zu verstrecken. Die Behandlungseinrichtung ist auf eine Strahlungsheizeinrichtung ausgebildet, die mehrfach von den Monofilamenten durchlaufen wird. Hierzu sind zu beiden Seiten der Behandlungseinrichtung Umlenkwalzen vorgesehen, so dass die Monofilamente mehrfach durch die Strahlungsheizeinrichtung führbar sind. Die in der zweiten Streckstufe erforderlichen Streckkräfte werden dabei durch zugeordnete Walzenlieferwerke bestimmt. Die bekannte Vorrichtung weist somit relativ lange Maschinenlängsseiten auf, die entsprechend lange Wege zur Bedienung der Einrichtungen für das Bedienpersonal erfordern.

Es ist nun Aufgabe der Erfindung, die gattungsgemäße Vorrichtung zur Herstellung von strangförmigen Produkten derart weiterzubilden, dass sich eine verbesserte Bedienbarkeit der Einrichtungen einstellt.

Ein weiteres Ziel der Erfindung liegt darin, eine gattungsgemäße Vorrichtung zur Herstellung von strangförmigen Produkten bereitzustellen, durch welche eine höhere Raumausnutzung innerhalb einer Maschinenhalle möglich ist.

Die erfindungsgemäße Aufgabe wird dadurch gelöst, dass die Behandlungseinrichtungen etagenförmig übereinander angeordnet sind und dass die Walzenlieferwerke zu beiden Enden der Behandlungseinrichtungen sich derart gegenüberstehen, dass die Behandlungseinrichtungen gegensinnig von dem Produkt durchlaufen sind.

Vorteilhafte Weiterbildungen der Erfindung sind durch die Merkmale und Merkmalskombinationen der Unteransprüche definiert.

Die Erfindung war auch nicht durch die bekannte Vorrichtung aus der DE 102008059008 A1 nahe liegend. Bei der bekannten Vorrichtung zur Herstellung von strangförmigen Waren wird die thermische Behandlung wahlweise durch eine Heißluft oder ein Heißwasser ausgeführt. Hierzu sind in einem höhenverstellbaren Gestell eine Wasserbadeinrichtung und ein Umluftofen gehalten, die je nach Prozesseinstellung in eine Behandlungsebene führbar sind. Die bekannte Vorrichtung basiert somit ebenfalls auf dem Konzept, dass die Waren in eine durch die hintereinander angeordneten Walzenlieferwerke vorbestimmte Materialflussrichtung geführt werden.

Die Erfindung löst sich von dem Konzept eines im Wesentlichen in eine Richtung durch die Walzenlieferwerke vorbestimmten Materialflusses einer Faserstraße. So lassen sich durch die etagenförmig übereinander angeordneten Behandlungseinrichtungen und entsprechende Anordnungen der Walzenlieferwerke Behandlungsstrecken in Materialflussrichtung und entgegen der Materialflussrichtung erzeugen. Sowohl die Behandlungseinrichtungen als auch die Walzenlieferwerke lassen sich dabei als kompakte Einheiten ausführen. Zur Bedienung der Behandlungseinrichtungen und der Walzenlieferwerke sind keine oder nur kurze Wegstrecken durch eine Bedienperson zu überwinden.

Die Behandlungseinrichtungen, die etagenförmig übereinander angeordnet sind, können auf die Erfordernisse des jeweiligen Prozesses abgestimmt sein. So lassen sich unterschiedliche Behandlungen an den strangförmigen Produkten an den jeweiligen Behandlungseinrichtungen ausführen. So lassen sich durch die Behandlungseinrichtungen beispielsweise Benetzungen, Abkühlungen oder Erwärmungen der Produkte durchführen. Eine besonders energieeffiziente Weiterbildung der Erfindung ist dadurch gegeben, dass die Behandlungseinrichtungen jeweils zur thermischen Behandlung der Produkte ausgebildet sind und separate Heizmittel aufweisen, wobei die Heizmittel der Behandlungseinrichtungen unabhängig voneinander steuerbar ausgebildet sind. Somit lassen sich vorteilhaft unterschiedliche thermische Behandlungen beispielsweise zum Verstrecken oder zum Relaxieren der Produkte ausführen.

Je nach Ausführung der Behandlungseinrichtungen können die Heizmittel durch eine Heißluft, einem Heißdampf oder Heißwasser gebildet sein.

Bevorzugt wird die erfindungsgemäße Vorrichtung in der Ausführung verwendet, bei welcher die Behandlungseinrichtungen als eine Heizvorrichtung mit mehreren etagenförmig übereinander angeordneten Heizkanälen ausgebildet sind. Hierbei sind die Heizkanäle unabhängig voneinander beheizbar ausgebildet, so dass in den Behandlungsstrecken zwischen den Walzenlieferwerken unterschiedliche thermische Behandlungen durchführbar sind.

Die Behandlungseinrichtungen werden dabei vorzugsweise in einem Trägergestell ortfest gehalten, dass zwischen zwei Walzengestellen angeordnet ist, an welchem die Walzen der Walzenlieferwerke gemeinsam gehalten sind. Damit lässt sich eine sehr kompakte Maschinenanordnung mit relativ kurzen Maschinenlängsseiten realisieren.

Die Walzenlieferwerke weisen vorzugsweise drei angetriebene Walzen mit auskragend gehaltenen Walzenmänteln auf, wobei die Walzenmäntel beheizbar oder kalt ausführbar sind. Somit lässt sich eine äußerst präzise Prozessführung bei der Herstellung der strangförmigen Produkte realisieren. Durch die beheizbaren Walzenmäntel der Walzen eines Walzenlieferwerks können vorteilhaft thermische Vorbehandlungen an den Produkten durchgeführt werden.

Die Walzen eines der Walzenlieferwerke werden vorzugsweise gemeinsam und unabhängig von den Walzen des benachbarten Walzenlieferwerks antreibbar ausgebildet. Damit lassen sich in jeder Behandlungsstrecke unterschiedliche Geschwindigkeitsdifferenzen einstellen. So können die Geschwindigkeitsdifferenzen zum Verstrecken oder zum Relaxieren der Produkte eingestellt werden.

Die erfindungsgemäße Aufgabe wird auch vorteilhaft durch die Verwendung einer Heizvorrichtung mit den Merkmalen nach Anspruch 7 gelöst. Bei den bekannten Heizvorrichtungen, wie beispielsweise in der GP 1,400,552 offenbart, wird die Behandlungsstrecke durch einen Heizkanal gebildet, welcher über Heizmittel beheizbar ist. Um mehrere Behandlungen in mehreren Behandlungsstrecken in unterschiedlicher Art und Weise ausführen zu können, weist die erfindungsgemäße Heizvorrichtung mehrere etagenförmig übereinander ausgebildete Heizkanäle auf, denen jeweils separate Heizmittel zugeordnet sind. Die Heizkanäle bilden dabei an einem Ende abwechselnd eine von mehreren Einlassöffnungen und eine von mehreren Auslassöffnungen auf, so dass die Behandlungsstrecken gegenläufig von einem Produkt durchlaufen werden.

Um Energieverluste sowie eine gegenseitige Beeinflussung der Behandlungsstrecken zu vermeiden ist gemäß einer vorteilhaften Weiterbildung der erfindungsgemäßen Heizvorrichtung zwischen den benachbarten Heizkanälen eine Wärmeisolierschicht angeordnet. Damit sind auch grö-βere Temperaturunterschiede zur Behandlung in den Heizkanälen einstellbar.

Als Heizmittel wird vorzugsweise eine Heißluft verwendet, die innerhalb des Heizkanals durch ein Gebläse und ein Heizelement erzeugbar ist.

Die den Heizkanälen zugeordneten Gebläse und Heizelemente werden dabei vorzugsweise unabhängig voneinander betrieben und gesteuert. So wäre für jede Behandlungsstrecke eine Temperaturregelung möglich.

Die Erfindung wird nachfolgend anhand einiger Ausführungsbeispiele der erfindungsgemäßen Vorrichtung zur Herstellung von strangförmigen Produkten unter Bezug auf die beigefügten Figuren näher erläutert.

Es stellen dar:
Figur 1 schematisch eine Ansicht eines ersten Ausführungsbeispiels der erfindungsgemäßen Vorrichtung
Figur 2 schematisch eine Ansicht eines weiteren Ausführungsbeispiels der erfindungsgemäßen Vorrichtung
Figur 3 schematisch eine Querschnittsansicht einer erfindungsgemäßen Heizvorrichtung

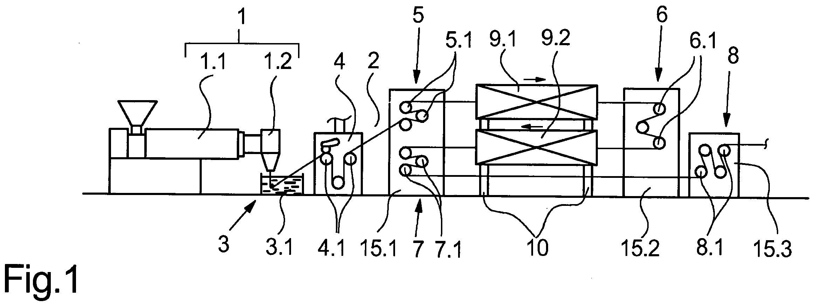

In Figur 1 ist schematisch ein erstes Ausführungsbeispiel der erfindungsgemäßen Vorrichtung zur Herstellung eines strangförmigen synthetischen Produktes in einer Ansicht dargestellt. Das Produkt könnte durch synthetische Bänder oder synthetische Monofilamente oder durch eine extrudierte Flachfolie gebildet sein.

Zur Herstellung eines derartigen Produktes weist das Ausführungsbeispiel eine Extrusionseinrichtung 1 mit einem Extruder 1.1 und einem Spinnkopf 1.2 auf. Der Spinnkopf 1.2 ist mit dem Extruder 1.1 verbunden und weist an seiner Unterseite ein Strangpresswerkzeug zum Extrudieren eines strangförmigen Produktes 2 auf.

Der Extrusionseinrichtung 1 ist eine Kühleinrichtung 3 zugeordnet, die in diesem Ausführungsbeispiel durch ein Kühlbad 3.1 gebildet ist. Das Kühlbad 3.1 enthält ein flüssiges Kühlmedium, um das frisch extrudierte Produkt 2 in Form von Bändern, Monofilamenten oder einer Folie abzukühlen und zu verfestigen. Der Kühleinrichtung 3 ist unmittelbar eine Trockeneinrichtung 4 mit mehreren Umlenkwalzen 4.1 zugeordnet, um das strangförmige Produkt 2 aus dem Kühlbad 3.1 abzuziehen und das an dem Produkt anhaftende Kühlmedium aufzunehmen und abzuführen. Das überschüssige Kühlmedium wird vorzugsweise abgesaugt.

Das strangförmige Produkt 2 wird hierbei von einem ersten Walzenlieferwerk 5 abgezogen und einer ersten Behandlungseinrichtung 9.1 zugeführt. Die erste Behandlungseinrichtung 9.1 erstreckt sich dabei zwischen dem ersten Walzenlieferwerk 5 und einem zweiten Walzenlieferwerk 6. Das erste Walzenlieferwerk 5 weist mehrere Walzen 5.1 auf, die an einem ersten Walzengestell 11.1 gehalten sind. Das zweite Walzenlieferwerk 6 weist ebenfalls mehrere angetriebene Walzen 6.1 auf, die an einem zweiten Walzengestell 11.2 angeordnet sind. Zwischen den Walzengestellen 11.1 und 11.2 ist ein Trägergestell 10 vorgesehen, an welchem die Behandlungseinrichtung 9.1 angeordnet ist. Unterhalb der Behandlungseinrichtung 9.1 ist eine zweite Behandlungseinrichtung 9.2 angeordnet, so dass die Behandlungseinrichtungen 9.1 und 9.2 etagenförmig übereinander gehalten sind. Jede der Behandlungseinrichtungen 9.1 und 9.2 bildet eine Behandlungsstrecke, in welchem eine vorbestimmte Behandlung an dem Produkt 2 ausführbar ist. Hierzu wird das Produkt 2 an den Walzen 6.1 des zweiten Walzenlieferwerks 6 derart geführt, dass die zweite Behandlungseinrichtung 9.2 von dem Produkt 2 gegensinnig durchlaufen wird. Das Produkt 2 wird hierbei durch ein drittes Walzenlieferwerk 7 mit mehreren Walzen 7.1 aus der zweiten Behandlungseinrichtung 9.2 abgezogen und anschließend um 180° umgelenkt, um von einem an dem gegenüberliegenden Ende der Behandlungseinrichtung 9.2 angeordneten vierten Walzenlieferwerk 8 aufgenommen zu werden und Richtung des Materialflusses geführt zu werden. Die angetriebenen Walzen 7.1 des dritten Walzenlieferwerkes 7 sind gemeinsam mit den Walzen 5.1 des ersten Walzenlieferwerks 5 an dem Walzengestell 11.1 gehalten. Somit lassen sich die durch die Behandlungseinrichtungen 9.1 und 9.2 gebildeten Behandlungsstrecken durch die zu beiden Enden der Behandlungseinrichtungen 9.1 und 9.2 angeordneten Walzenlieferwerke 5, 6, 7 und 8 gegensinnig von dem Produkt durchlaufen.

Die Walzen 5.1 des ersten Walzenlieferwerks 5 sind unabhängig von den Walzen 7.1 des dritten Walzenlieferwerks 7 angetrieben. Ebenso werden die Walzen 6.1 des zweiten Walzenlieferwerks 6 unabhängig von den Walzen 8.1 des vierten Walzenlieferwerks 8 angetrieben. Die Walzen 8.1 des vierten Walzenlieferwerks 8 sind an einem separaten Walzengestell 11.3 angeordnet. Alternativ wäre jedoch auch möglich, die Walzenlieferwerke 6 und 8 gemeinsam an dem Walzengestell 11.2 anzuordnen.

Zwischen den Walzenlieferwerken 5 und 6 sowie zwischen den Walzenlieferwerken 6 und 7 lassen sich Geschwindigkeitsdifferenzen zum Verstrecken des Produktes einstellen. Dabei können sowohl die Walzen 5.1 des ersten Walzenlieferwerkes 5 als auch die Walzen 6.1 oder 7.1 des zweiten Walzenlieferwerkes 6 und des dritten Walzenlieferwerkes 7 mit beheizten Walzenmänteln ausgebildet sein. Insoweit könnte die Behandlungseinrichtung 9.1 und die Behandlungseinrichtung 9.2 jeweils eine thermische Behandlung an dem Produkt durchführen, um eine mehrstufige Verstreckung zu erhalten. So könnte beispielsweise die erste Behandlungseinrichtung ein Wasserbad mit einem Heißwasser oder ein Dampfkanal mit einem Heißdampf sein. Die zweite Behandlungseinrichtung 9.2 könnte als eine Heizeinrichtung mit einem Heizkanal oder ein Wasserbad mit einem Heißwasser sein. Unabhängig von der Ausführung und Ausbildung der Behandlungseinrichtungen 9.1 und 9.2 ist wesentlich, dass durch die etagenförmig übereinander angeordneten Behandlungseinrichtungen 9.1 und 9.2 gegensinnig durchlaufenden Behandlungsstrecken für das Produkt gebildet werden, die zwischen den sich an den Walzengestellen 11.1 und 11.2 gegenüberliegenden Walzenlieferwerken 5, 6 und 7 führbar sind.

Das von dem letzten Walzenlieferwerk 8 durch die Walzen 8.1 geführte Produkt könnte anschließend unmittelbar einer Aufwickeleinrichtung oder alternativ weiteren Behandlungseinrichtungen zugeführt werden. So ist es beispielsweise bei der Herstellung von Monofilamenten oder Bändern möglich, diese vor dem separaten Aufwickeln zu mehreren zusammenzuführen und zu texturieren.

Bei dem in Figur 1 dargestellten Ausführungsbeispiel wird das strangförmige Produkt 2 in mehreren Stufen verstreckt. Grundsätzlich besteht jedoch auch die Möglichkeit, neben der Verstreckung anschließend eine Schrumpfbehandlung an dem strangförmigen Produkt 2 auszuführen. Bei einer Schrumpfbehandlung, die auch als Relaxierung bekannt ist, werden Produkte wie Monofilamente oder Bändchen mit einer geringen Überlieferung zwischen zwei Walzenlieferwerke geführt, um die in dem synthetischen Material erzeugten Spannungen abzubauen. Hierzu wird ebenfalls vorzugsweise eine thermische Behandlung an dem Produkt vorgenommen.

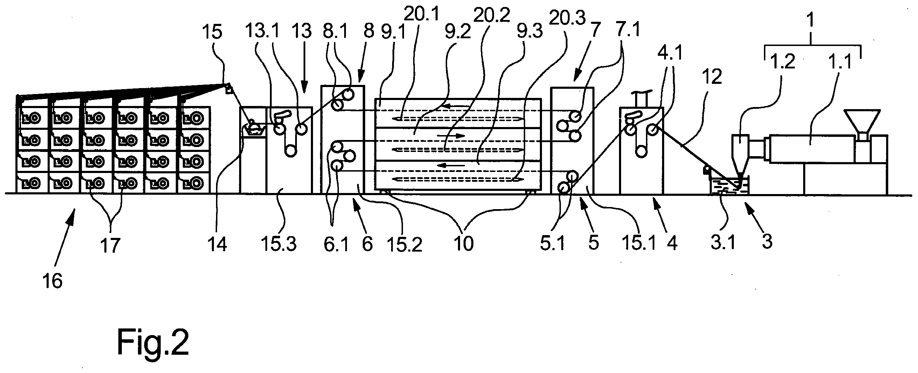

In Figur 2 ist ein mögliches Ausführungsbeispiel einer derartigen Mehrfachbehandlung durch Verstrecken und Relaxieren anhand einer Vorrichtung zur Herstellung von Monofilamenten beispielhaft gezeigt. Das Ausführungsbeispiel nach Figur 2 weist eine Extrusionseinrichtung 1, eine Kühleinrichtung 3 und eine Trockeneinrichtung 4 auf, die im Wesentlichen identisch zu dem vorgenannten Ausführungsbeispiel ausgebildet sind. Hierbei weist der Spinnkopf 1.2 der Extrusionseinrichtung 1 an seiner Unterseite eine Vielzahl von Düsenbohrungen auf, aus denen eine Schar von Monofilamenten 12 extrudiert wird. Die Monofilamente 12 werden innerhalb des Kühlbades 3.1 der Kühleinrichtung 3 abgekühlt und der Trockeneinrichtung 4 zugeführt. Anschließend werden die Monofilamente 12 durch die Walzen 5.1 eines ersten Walzenlieferwerkes 5 zu einer mehrstufigen thermischen Behandlung geführt. Hierzu sind an einem Trägergestell 10 drei Behandlungseinrichtungen 9.1, 9.2 und 9.3 etagenförmig übereinander angeordnet. Jedes der Behandlungseinrichtungen 9.1, 9.2 und 9.3 weist jeweils ein Heizmittel 20.1, 20.2 und 20.3 auf, die unabhängig voneinander steuerbar sind, so dass in einer ersten Behandlungsstrecke durch die Behandlungseinrichtung 9.1 eine erste thermische Behandlung ausführbar ist. In den nachfolgend gegensinnig durchlaufenden Behandlungsstrecken der Behandlungseinrichtungen 9.2 und 9.3 lassen sich somit weitere thermische Behandlungen an den Monofilamenten 12 durchführen.

Den Behandlungseinrichtungen 9.:1, 9.2 und 9.3 sind an ihren Enden mehrere Walzenlieferwerke zugeordnet, die an den Walzengestellen 11.1 und 11.2 gehalten sind. An dem ersten Walzengestell 11.1 sind die Walzen 5.1 des ersten Walzenlieferwerks 5 und die Walzen 7.1 des dritten Walzenlieferwerks 7 auskragend angeordnet. An dem gegenüberliegenden Walzengestell 11.2 sind die Walzen 6.1 des zweiten Walzenlieferwerks 6 sowie die Walzen 8.1 des vierten Walzenlieferwerks 8 übereinander auskragend gehalten. Die Walzen der Walzenlieferwerke 5, 6, 7 und 8 sind unabhängig voneinander angetrieben. So lassen sich beispielsweise die Walzen 5.1 des ersten Walzenlieferwerks 5 durch einen Elektromotor und ein Getriebe gemeinsam antreiben. Damit sind zwischen den Walzenlieferwerken 5, 6, 7 und 8 beliebige Geschwindigkeitsdifferenzen zum Verstrecken oder Relaxieren einstellbar. So lässt sich beispielhaft an den Monofilamenten 12 zwischen den Walzen 5.1 des ersten Walzenlieferwerks 5 und den Walzen 6.1 des zweiten Walzenlieferwerks 6 eine vollständige Verstreckung ausführen. In den nachfolgenden Behandlungsstrecken der Behandlungseinrichtungen 9.2 und 9.3 können Relaxierungen und Fixierungen an den Monofilamenten 12 ausgeführt werden.

Im weiteren Verlauf des Materialflusses ist an der Maschinenlängsseite ein fünftes Walzenlieferwerk 13 mit den Walzen 13.1 sowie eine nachfolgende Präparationseinrichtung 14 vorgesehen. Die Walzen 13.1 des fünften Walzenlieferwerks 13 werden an einem separaten Walzengestell 11.3 gehalten. Der Präparationseinrichtung 14 folgt eine Aufwickeleinrichtung 16 mit einer Vielzahl von Wickelstellen 17. Hierbei werden die Monofilamente 12 nach dem Präparieren über eine Verteilerleiste 15 separiert und den einzelnen Wickelstellen 17 der Aufwickeleinrichtung 16 zugeführt.

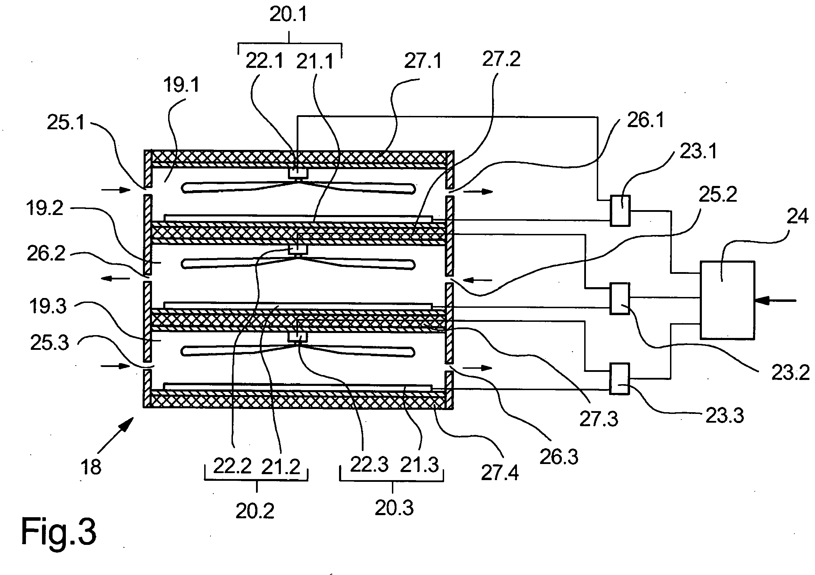

Bei dem in Figur 2 dargestellten Ausführungsbeispiel sind die Behandlungseinrichtungen 9.1, 9.2 und 9.3 zur thermischen Behandlung vorgesehen und könnten beispielsweise durch eine Heizvorrichtung 18 gebildet werden. Ein Ausführungsbeispiel einer derartigen Heizvorrichtung 18 ist in Figur 3 schematisch in einer Querschnittsansicht dargestellt. Das Ausführungsbeispiel der erfindungsgemäßen Heizvorrichtung 18 weist drei etagenförmig übereinander angeordnete Heizkanäle 19.1, 19.2 und 19.3 auf. Die Heizkanäle 19.1, 19.2 und 19.3 sind innerhalb der Heizvorrichtung 18 identisch ausgebildet und weisen jeweils separate Heizmittel 20.1, 20.2 und 20.3 auf. Das Heizmittel 20.1 im Heizkanal 19.1 wird durch ein erstes Gebläse 22.1 und ein erstes Heizelement 21.1 gebildet. Das Gebläse 22.1 und das Heizelement 21.1 sind über ein Steuergerät 23.1 steuerbar. Dementsprechend wird das Heizmittel 20.2 in dem Heizkanal 19.2 durch ein zweites Gebläse 22.2 und einem zweiten Heizelement 21.2 gebildet. Das zweite Gebläse 22.2 und das zweite Heizelement 21.2 sind mit dem Steuergerät 23.2 gekoppelt. Dementsprechend wird der dritte Heizkanal 19.3 durch das Gebläse 22.3 und dem Heizelement 21.3 beheizt, wobei ein Steuergerät 23.3 dem Gebläse 22.3 und dem Heizelement 21.3 zugeordnet ist. Die Steuergeräte 23.1, 23.2 und 23.3 sind einer Steuereinheit 24 zugeordnet.

Innerhalb der Heizvorrichtung 18 ist zwischen den benachbarten Heizkanälen 19.1 und 19.2 eine erste Wärmeisolierung 27.1 und zwischen den Heizkanälen 19.2 und 19.3 die zweite Wärmeisolierung 27.2 vorgesehen. Darüber hinaus sind an den äußeren Wänden der Heizkanäle 19.1 und 19.3 weitere Wärmeisolierungen 27.3 und 27.4 angeordnet.

An den Enden der Heizkanäle 19.1, 19.2 und 19.3 sind jeweils eine Einlassöffnung und eine Auslassöffnung vorgesehen, um das strangförmige Produkt in Form von Bändern, Fasersträngen oder Monofilamenten durch die Heißluftatmosphäre der jeweiligen Heizkanäle 19.1 bis 19.3 zu führen. Um gegensinnig durchlaufende Behandlungsstrecken zu erhalten, weisen die Heizkanäle 19.1 und 19.3 jeweils am linken Ende eine Einlassöffnung 25.1 und 25.3 auf. Bei dem mittleren Heizkanal 19.2 ist die Einlassöffnung 25.2 am gegenüberliegenden rechten Ende der Heizvorrichtung 18 ausgebildet. Dementsprechend ist die Auslassöffnung 26.2 des mittleren Heizkanals 19.2 am linken Ende der Heizvorrichtung 18 ausgebildet. Die Auslassöffnungen 26.1 und 26.3 der Heizkanäle 19.1 und 19.3 sind gegenüberliegend an dem rechten Ende vorgesehen.

Die in Figur 3 dargestellte Heizvorrichtung 18 ist besonders geeignet, um in dem in Figur 2 dargestellten Ausführungsbeispiel eingesetzt zu werden. Hierbei lassen sich über die Steuergeräte 23.1, 23.2 und 23.3 in den Heizkanälen 19.1, 19.2 und 19.3 unterschiedliche Heisluftatmosphären einstellen, um entsprechend dem thermoplastischen Material der Monofilamente eine thermische Behandlung zur Verstreckung oder zur Schrumpfbehandlung oder zur Fixierung zu erhalten. Über die Steuereinheit 24 lassen sich dabei die aufgegebenen Prozessparameter unmittelbar als Steuerbefehl den Heizmitteln 20.1, 20.2 und 20.3 zuführen. Damit wird eine hohe Flexibilität bei der Durchführung der thermischen Behandlung in den einzelnen Behandlungsstrecken erreicht.

### Bezugszeichenliste

- 1: Extrusionseinrichtung
- 1.1: Extruder
- 1.2: Spinnkopf
- 2: strangförmiges Produkt
- 3: Kühleinrichtung
- 3.1: Kühlbad
- 4: Trockeneinrichtung
- 4.1: Umlenkwalze
- 5: erstes Walzenlieferwerk
- 5.1: Walze
- 6: zweites Walzenlieferwerk
- 6.1: Walze
- 7: drittes Walzenlieferwerk
- 7.1: Walze
- 8: viertes Walzenlieferwerk
- 8.1: Walze
- 9.1, 9.2, 9.3: Behandlungseinrichtung
- 10: Trägergestell
- 11.1, 11.2, 11.3: Walzengestell
- 12: Monofilament
- 13: fünftes Walzenlieferwerk
- 13.1: Walze
- 14: Präparationseinrichtung
- 15: Verteilerleiste
- 16: Aufwickeleinrichtung
- 17: Wickelstelle
- 18: Heizvorrichtung
- 19.1, 19.2, 19.3: Heizkanal
- 20.1, 20.2, 20.3: Heizmittel
- 21.1, 21.2, 21.3: Heizelement
- 22.1, 22.2, 22.3: Gebläse
- 2 3.1, 2 3.2, 23.3: Steuergerät
- 24: Steuereinheit
- 25.1, 25.2, 25.3: Einlassöffnung
- 26.1, 26.2, 26.3: Auslassöffnung
- 27.1, 27.2, 27.3, 27.4: Wärmeisolierung

## Patentansprüche

1. Vorrichtung zur Herstellung von strangförmigen Produkten wie synthetische Bänder, Faserstränge, Monofilamente oder Folien, die aus einer Polymerschmelze extrudiert werden, mit einer Extrusionseinrichtung (1), mit einer Kühleinrichtung (3), mit mehreren Walzenlieferwerken (5, 6, 7) und mehreren zwischen den Walzenlieferwerken (5, 6, 7) angeordneten Behandlungseinrichtungen (9.1, 9.2),
**dadurch gekennzeichnet, dass**
die Behandlungseinrichtungen (9.1, 9.2) etagenförmig übereinander angeordnet sind und dass die Walzlieferwerke (5, 6, 7) zu beiden Enden der Behandlungseinrichtungen (9.1, 9.2) sich derart gegenüberstehen, dass die Behandlungseinrichtungen (9.1, 9.2) gegensinnig von dem Produkt durchlaufen sind und dass
- die Behandlungseinrichtungen (9.1, 9.2) zur thermischen Behandlung der Produkte separate Heizmittel (20.1, 20.2) aufweisen, wobei die Heizmittel (20.1, 20.2) der Behandlungseinrichtungen (9.1, 9.2) unabhängig voneinander steuerbar ausgebildet sind, und/oder
- die Behandlungseinrichtungen (9.1, 9.2, 9.3) als eine Heizvorrichtung (18) mit mehreren etagenförmig übereinander angeordneten Heizkanälen (19.1, 19.2, 19.3) ausgebildet ist, welche unabhängig voneinander beheizbar ausgebildet sind.

2. Vorrichtung nach Anspruch 1.
**dadurch gekennzeichnet, dass**
die Heizmittel (20.1, 20.2) je nach Ausführung der Behandlungseinrichtung (9.1, 9.2) durch eine Heißluft, einem Heißdampf und/oder einem Heißwasser gebildet sind.

3. Vorrichtung nach Anspruch 1 oder 2,
**dadurch gekennzeichnet, dass**
die Behandlungseinrichtungen (9.1, 9.2) in einem Trägergestell (10) ortsfest gehalten sind, das zwischen zwei Walzengestellen (11.1, 11.2) angeordnet ist.

4. Vorrichtung nach Anspruch 3,
**dadurch gekennzeichnet, dass**
die den Enden der Behandlungseinrichtungen (9.1, 9.2) zugeordneten Walzlieferwerke (5, 6, 7) mit ihren Walzen (5.1, 6.1, 7.1, 8.1) gemeinsam an den Walzengestellen (11.1, 11.2) angeordnet sind.

5. Vorrichtung nach einem der Ansprüche 1 bis 4,
**dadurch gekennzeichnet, dass**
die Walzlieferwerke (5, 6, 7) zumindest jeweils drei angetriebene Walzen (5.1, 5.2, 5.3) mit auskragend gehaltenen Walzenmänteln aufweisen, wobei die Walzenmäntel beheizbar oder kalt ausführbar sind.

6. Vorrichtung nach einem der Ansprüche 1 bis 5,
**dadurch gekennzeichnet, dass**
die Walzen (5.1) eines der Walzlieferwerke (5) gemeinsam und unabhängig von den Walzen (6.1) des benachbarten Walzlieferwerks (6) antreibbar ausgebildet sind.

7. Heizvorrichtung zur Verwendung in einer Vorrichtung zur Herstellung von strangförmigen Produkten wie synthetische Bänder, Faserstränge, Monofilamente oder Folien, die aus einer Polymerschmelze extrudiert werden, mit einer Extrusionseinrichtung (1), mit einer Kühleinrichtung (3), mit mehreren Walzenlieferwerken (5, 6, 7) und mehreren zwischen den Walzenlieferwerken (5, 6, 7) angeordneten Behandlungseinrichtungen (9.1, 9.2), wobei die Behandlungseinrichtungen (9.1, 9.2) etagenförmig übereinander angeordnet sind und die Walzlieferwerke (5, 6, 7) zu beiden Enden der Behandlungseinrichtungen (9.1, 9.2) sich derart gegenüberstehen, dass die Behandlungseinrichtungen (9.1, 9.2) gegensinnig von dem Produkt durchlaufen sind, mit einem Heizkanal (19.1), der eine Einlassöffnung (25.1) und eine Auslassöffnung (26.1) zur Führung strangförmiger Produkte (2) aufweist, und mit einem Heizmittel (20.1) zur Beheizung des Heizkanals (19.1),
**dadurch gekennzeichnet, dass**
mehrere etagenförmig übereinander ausgebildete Heizkanäle (19.1, 19.2, 19.3) vorgesehen sind, denen jeweils separate Heizmittel (20.1, 20.2, 20.3) zugeordnet sind, und dass die Heizkanäle (19.1, 19.2, 19.3) an einem Ende abwechselnd eine von mehreren Einlassöffnungen (25.1) und eine von mehreren Auslassöffnungen (26.2) aufweisen.

8. Heizvorrichtung nach Anspruch 7 zur Verwendung in einer Vorrichtung nach einem der Ansprüche 1 bis 6.

9. Heizvorrichtung nach Anspruch 7 oder 8,
**dadurch gekennzeichnet, dass**
zwischen den benachbarten Heizkanälen (19.1, 19.2) eine Wärmeisolierschicht (27.1) angeordnet ist.

10. Heizvorrichtung nach einem der Ansprüche 7 bis 9,
**dadurch gekennzeichnet, dass**
das Heizmittel (20.1) eine Heißluft ist, die innerhalb des Heizkanals (19.1) durch ein Gebläse (22.1) und ein Heizelement (21.1) erzeugbar ist.

11. Heizvorrichtung nach Anspruch 10,
**dadurch gekennzeichnet, dass**
die Gebläse (22.1, 22.2, 22.3) und die Heizelemente (21.1, 21.2, 21.3) der Heizkanäle (19.1, 19.2, 19.3) unabhängig voneinander steuerbar ausgebildet sind.

## Claims

1. Device for producing strand-shaped products such as synthetic tapes, fibre strands, monofilaments, or films which are extruded from a polymer melt, having an extrusion installation (1), having a cooling installation (3), having a plurality of roller delivery units (5, 6, 7) and a plurality of treatment installations (9.1, 9.2) that are disposed between the roller delivery units (5, 6, 7),
**characterized in that**
the treatment installations (9.1, 9.2) are disposed in levels on top of one another, and **in that** the roller delivery units (5, 6, 7) at both ends of the treatment installations (9.1, 9.2) are mutually opposite in such a manner that the treatment installations (9.1, 9.2) are passed through by the product in opposite directions, and **in that**
- the treatment installations (9.1, 9.2) for the thermal treatment of the products have separate heating means (20.1, 20.2), wherein the heating means (20.1, 20.2) of the treatment installations (9.1, 9.2) are configured so as to be controllable in a mutually independent manner, and/or
- the treatment installations (9.1, 9.2, 9.3) is configured as a heating device (18) having a plurality of heating ducts (19.1, 19.2, 19.3) that are disposed in levels on top of one another and which are configured so as to be heatable in a mutually independent manner.

2. Device according to Claim 1,
**characterized in that**
the heating means (20.1, 20.2), depending on the embodiment of the treatment installation (9.1, 9.2), are formed by hot air, hot steam,
and/or hot water.

3. Device according to either of Claims 1 and 2, **characterized in that** the treatment installations (9.1, 9.2) are held in a locationally fixed manner in a support frame (10) which is disposed between two roller frames (11.1, 11.2).

4. Device according to Claim 3,
**characterized in that**
the roller delivery units (5, 6, 7) that are assigned to the ends of the treatment installations (9.1, 9.2) by way of the rollers (5.1, 6.1, 7.1, 8.1) of said roller delivery units (5, 6, 7) are disposed collectively on the roller frames (11.1, 11.2).

5. Device according to one of Claims 1 to 4, **characterized in that** the roller delivery units (5, 6, 7), have at least three, in each case driven, rollers (5.1, 5.2, 5.3) having roller jackets that are held in a protruding manner, wherein the roller jackets are capable of being embodied so as to be heatable or cold.

6. Device according to one of Claims 1 to 5, **characterized in that** the rollers (5.1) of one of the roller delivery units (5) are configured so as to be driveable collectively and independently of the rollers (6.1) of the neighbouring roller delivery unit (6).

7. Heating device for use in a device for the production of strand-shaped products such as synthetic tapes, fibre tapes, monofilaments, or films which are extruded from a polymer melt, having an extrusion installation (1), having a cooling installation (3), having a plurality of roller delivery units (5, 6, 7) and a plurality of treatment installations (9.1, 9.2) that are disposed between the roller delivery units (5, 6, 7), wherein the treatment installations (9.1, 9.2) are disposed in levels on top of one another, and in that the roller delivery units (5, 6, 7) at both ends of the treatment installations (9.1, 9.2) are mutually opposite in such a manner that the treatment installations (9.1, 9.2) are passed through by the product in opposite directions, having a heating duct (19.1) which has an inlet opening (25.1) and an outlet opening (26.1) for guiding strand-shaped products (2), and having a heating means (20.1) for heating the heating duct (19.1), **characterized in that**
a plurality of heating ducts (19.1, 19.2, 19.3) that are configured in levels on top of one another are provided, in each case separate heating means (20.1, 20.2, 20.3) being assigned to said heating ducts (19.1, 19.2, 19.3), and **in that** the heating ducts (19.1, 19.2, 19.3) at one end thereof in an alternating manner have one of a plurality of inlet openings (25.1) and one of a plurality of outlet openings (26.2).

8. Heating device according to Claim 7 for use in a device according to one of Claims 1 to 6.

9. Heating device according to either of Claims 7 and 8,
**characterized in that**
a heat insulation layer (27.1) is disposed between the neighbouring heating ducts (19.1, 19,2).

10. Heating device according to one of Claims 7 to 9, **characterized in that**
the heating means (20.1) is hot air which within the heating duct (19.1) is generatable by way of a blower (22.1) and of a heating element (21.1).

11. Heating device according to Claim 10, **characterized in that** the blower (22.1, 22.2, 22.3) and the heating elements (21.1, 21.2, 21.3) of the heating ducts (19.1, 19.2, 19.3) are configured so as to be controllable in a mutually independent manner.

## Revendications

1. Dispositif pour la fabrication de produits allongés tels que des bandes, des cordons de fibres, des mono-filaments ou des films synthétiques, qui sont extrudés à partir de polymère fondu, avec un dispositif d'extrusion (1), avec un dispositif de refroidissement (3), avec plusieurs distributeurs à rouleaux (5, 6, 7) et plusieurs dispositifs de traitement (9.1, 9.2) disposés entre les distributeurs à rouleaux (5, 6, 7), **caractérisé en ce que** les dispositifs de traitement (9.1, 9.2) sont disposés de façon étagée l'un au-dessus de l'autre et **en ce que** les distributeurs à rouleaux (5, 6, 7) se font face vers les deux extrémités des dispositifs de traitement (9.1, 9.2), de telle manière que les dispositifs de traitement (9.1, 9.2) soient parcourus en sens contraire par le produit et que
- les dispositifs de traitement (9.1, 9.2) présentent des moyens de chauffage séparés (20.1, 20.2) pour le traitement thermique des produits, dans lequel les moyens de chauffage (20.1, 20.2) des dispositifs de traitement (9.1, 9.2) peuvent être commandés indépendamment l'un de l'autre, et/ou
- les dispositifs de traitement (9.1, 9.2, 9.3) est réalisé sous la forme d'un dispositif de chauffage (18) avec plusieurs canaux de chauffage (19.1, 19.2, 19.3) disposés de façon étagée l'un au-dessus de l'autre, qui peuvent être chauffés indépendamment l'un de l'autre.

2. Dispositif selon la revendication 1, **caractérisé en ce que** les moyens de chauffage (20.1, 20.2) sont formés, suivant le mode de réalisation du dispositif de traitement (9.1, 9.2), par un air chaud, une vapeur chaude et/ou une eau chaude.

3. Dispositif selon la revendication 1 ou 2, **caractérisé en ce que** les dispositifs de traitement (9.1, 9.2) sont maintenus de façon fixe dans une structure de support (10), qui est disposée entre deux cages à rouleaux (11.1, 11.2).

4. Dispositif selon la revendication 3, **caractérisé en ce que** les distributeurs à rouleaux (5, 6, 7) associés aux extrémités des dispositifs de traitement (9.1, 9.2) sont disposés avec leurs rouleaux (5.1, 6.1, 7.1, 8.1) ensemble sur les cages à rouleaux (11.1, 11.2).

5. Dispositif selon l'une quelconque des revendications 1 à 4, **caractérisé en ce que** les distributeurs à rouleaux (5, 6, 7) présentent au moins chacun trois rouleaux entraînés (5.1, 5.2, 5.3) avec des enveloppes latérales maintenues en saillie, dans lequel les enveloppes latérales peuvent être réalisées sous forme chauffante ou froide.

6. Dispositif selon l'une quelconque des revendications 1 à 5, **caractérisé en ce que** les rouleaux (5.1) d'un des distributeurs à rouleaux (5) peuvent être entraînés en commun et indépendamment des rouleaux (6.1) du distributeur à rouleaux voisin (6).

7. Dispositif de chauffage à utiliser dans un dispositif pour la fabrication de produits allongés tels que des bandes, des cordons de fibres, des mono-filaments ou des films synthétiques, qui sont extrudés à partir de polymère fondu, avec un dispositif d'extrusion (1), avec un dispositif de refroidissement (3), avec plusieurs distributeurs à rouleaux (5, 6, 7) et plusieurs dispositifs de traitement (9.1, 9.2) disposés entre les distributeurs à rouleaux (5, 6, 7), dans lequel les dispositifs de traitement (9.1, 9.2) sont disposés de façon étagée l'un au-dessus de l'autre et les distributeurs à rouleaux (5, 6, 7) se font face vers les deux extrémités des dispositifs de traitement (9.1, 9.2), de telle manière que les dispositifs de traitement (9.1, 9.2) soient parcourus en sens contraire par le produit, avec un canal de chauffage (19.1), qui présente une ouverture d'entrée (25.1) et une ouverture de sortie (26.1) pour le guidage de produits allongés (2), et avec un moyen de chauffage (20.1) pour le chauffage du canal de chauffage (19.1), **caractérisé en ce qu'**il est prévu plusieurs canaux de chauffage (19.1, 19.2, 19.3) disposés de façon étagée l'un au-dessus de l'autre, auxquels sont respectivement associés des moyens de chauffage séparés (20.1, 20.2, 20.3), et **en ce que** les canaux de chauffage (19.1, 19.2, 19.3) présentent à une extrémité alternativement une de plusieurs ouvertures d'entrée (25.1) et une de plusieurs ouvertures de sortie (26.2).

8. Dispositif de chauffage selon la revendication 7 à utiliser dans un dispositif selon l'une quelconque des revendications 1 à 6.

9. Dispositif de chauffage selon la revendication 7 ou 8, **caractérisé en ce qu'**une couche d'isolation thermique (27.1) est disposée entre les canaux de chauffage voisins (19.1, 19.2).

10. Dispositif de chauffage selon l'une quelconque des revendications 7 à 9, **caractérisé en ce que** le moyen de chauffage (20.1) est un air chaud, qui peut être produit à l'intérieur du canal de chauffage (19.1) par une soufflante (22.1) et un élément chauffant (21.1).

11. Dispositif de chauffage selon la revendication 10, **caractérisé en ce que** les soufflantes (22.1, 22.2, 22.3) et les éléments chauffants (21.1, 21.2, 21.3) des canaux de chauffage (19.1, 19.2, 19.3) peuvent être commandés indépendamment l'un de l'autre.
